## Europäisches Patentamt
## European Patent Office
## Office européen des brevets

(19)

(11) Numéro de publication: **0 063 822**
**B1**

(12) **FASCICULE DE BREVET EUROPEEN**

(45) Date de publication du fascicule du brevet:
**11.07.84**

(21) Numéro de dépôt: **82103623.3**

(22) Date de dépôt: **28.04.82**

(51) Int. Cl.³: **F 24 C 7/08,** A 47 J 36/24,
A 47 J 27/62, H 05 B 1/02

(54) **Appareil électrique de cuisson.**

(30) Priorité: **29.04.81 FR 8108538**

(43) Date de publication de la demande:
**03.11.82 Bulletin 82/44**

(45) Mention de la délivrance du brevet:
**11.07.84 Bulletin 84/28**

(84) Etats contractants désignés:
**AT BE CH DE GB IT LI NL SE**

(56) Documents cités:
**EP - A - 0 029 991**
**FR - A - 1 345 766**
**US - A - 2 749 426**

(73) Titulaire: **MOULINEX S.A., 7 à 15, rue Jules-Ferry,
F-93170 Bagnolet (FR)**

(72) Inventeur: **Weiss, Roger, 28, Montpichet Bouleurs,
F-77580 Crécy-la-Chapelle (FR)**

(74) Mandataire: **May, Hans Ulrich, Thierschstrasse 27,
D-8000 München 22 (DE)**

ACTORUM AG

**Description**

L'invention se rapporte aux appareils électriques de cuisson comportant un boîtier présentant la forme d'un puits cylindrique, une résistance chauffante disposée dans un plan horizontal au voisinage du fond de ce puits, un dispositif de commande de l'alimentation de cette résistance, une cuve amovible de réception des aliments adaptée à s'engager dans le puits et à occuper une première position, dite position de cuisson, pour laquelle le fond de cette cuve est en contact thermique avec la résistance, et des moyens de support de la cuve adaptés à maintenir cette cuve dans le puits en une seconde position, dite position haute.

Un appareil de ce genre a été décrit dans le brevet US-A-2 749 426. On notera cependant que, dans cet appareil, le fond de la cuve demeure en contact thermique avec la résistance pour la position haute. Puisque cette résistance, en raison de son inertie thermique, demeure encore chaude un certain temps après l'interruption de son alimentation électrique qui se produit automatiquement dès le passage en position haute, la cuve continue alors à recevoir un apport calorifique et la cuisson se poursuit encore en la position haute.

L'invention a pour but d'interrompre pratiquement la cuisson dès le passage en la position haute.

Un appareil électrique de cuisson selon l'invention est caractérisé en ce que en position haute le fond de la cuve est écarté de la résistance.

Ainsi l'utilisateur peut, en déplaçant simplement la cuve, interrompre la cuisson lorsqu'il le désire.

Les caractéristiques et avantages de l'invention ressortiront d'ailleurs de la description qui va suivre, à titre d'exemple, en référence aux dessins annexés dans lesquels:

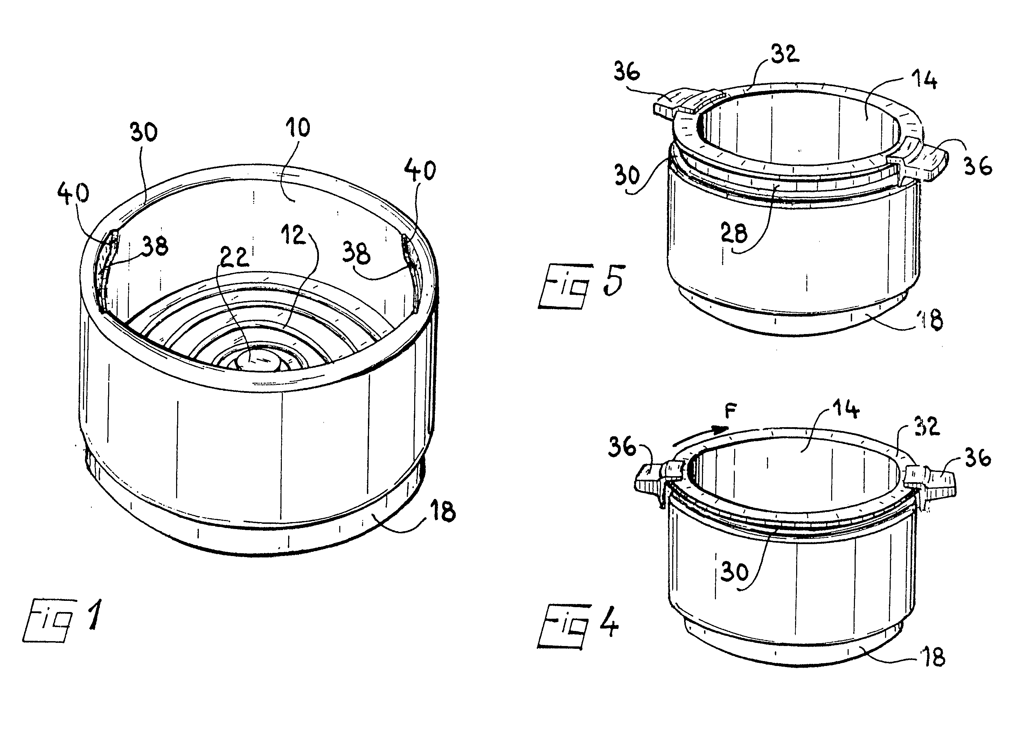

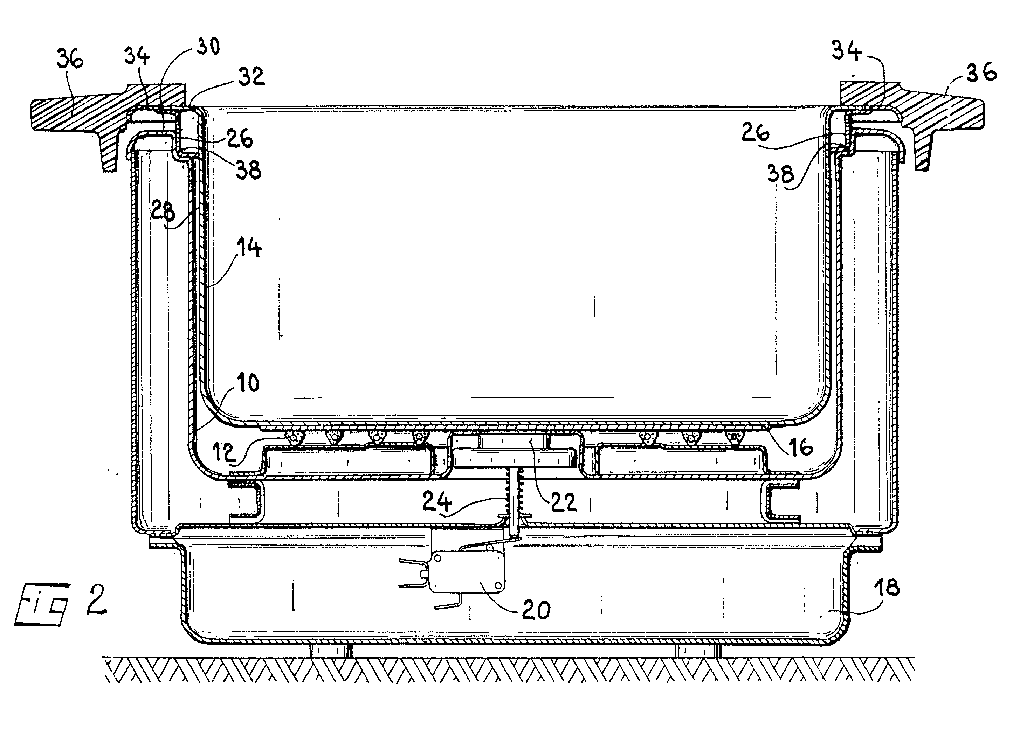

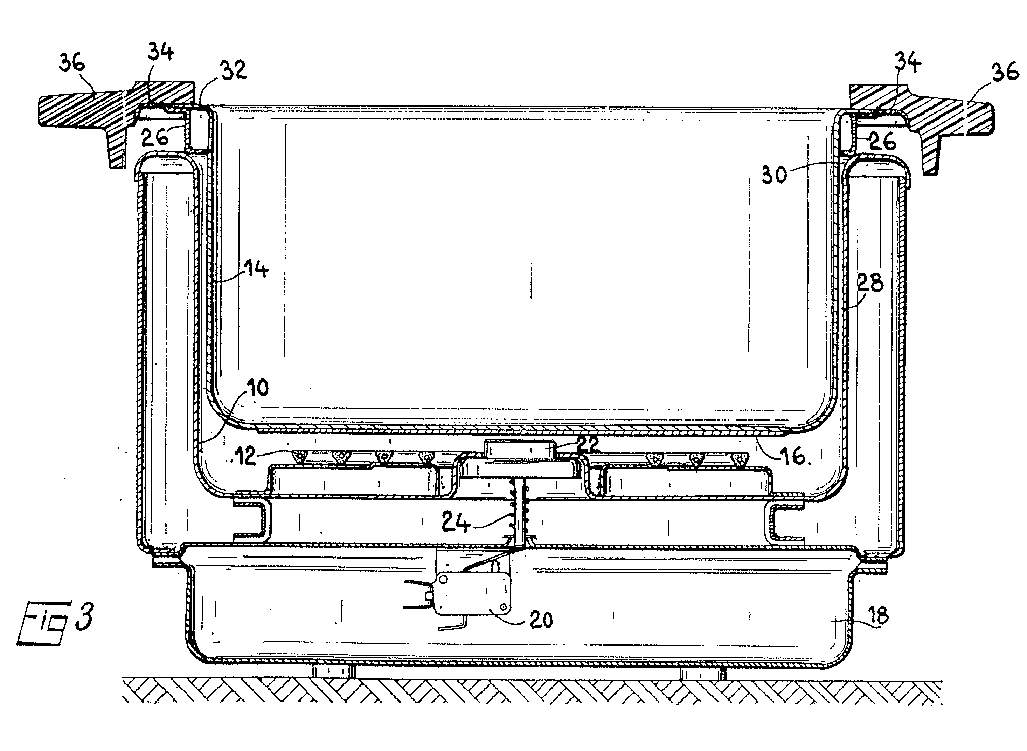

la figure 1 est une vue en perspective d'un appareil électrique de cuisson selon l'invention après enlèvement de la cuve pour mieux laisser voir le puits cylindrique de réception de cette cuve; la figure 2 représente, à plus grande échelle, une coupe verticale de cet appareil avec la cuve en la position de cuisson, pour laquelle le fond de cette cuve est en contact thermique avec la résistance chauffante; la figure 3 est une vue similaire à la figure 2 mais avec la cuve en la position haute, pour laquelle le fond de cette cuve est écarté de la résistance; la figure 4 représente, à plus petite échelle et en perspective, l'appareil avec la cuve en position de cuisson; la figure 5 est une vue analogue à la figure 4 mais avec la cuve en position haute.

L'appareil de cuisson représenté comporte un boîtier 10 présentant la forme d'un puits cylindrique, une résistance blindée spiralée 12 disposée dans un plan horizontal au voisinage du fond de ce puits, et une cuve amovible cylindrique 14 de réception d'aliments adaptée à s'engager dans le puits et à occuper ainsi au moins une position, dite position de cuisson, (fig. 2 et 4) pour laquelle le fond 16 de cette cuve est en contact thermique avec la résistance 12.

Comme on le voit bien sur les figures 2 et 3, le boîtier 10 est supporté par une embase 18 dans laquelle est agencé un dispositif de commande de l'alimentation de la résistance 12. Ce dispositif comprend un interrupteur 20 monté en série avec la résistance et manœuvré par un palpeur 22 agencé dans le puits dans la région centrale de la résistance 12 de manière que la mise en place de la cuve 14 en sa position de cuisson entraîne la fermeture de cet interrupteur 20 par action du fond de la cuve sur le palpeur 22. Ce palpeur peut être, par exemple, le palpeur d'un thermostat conformément à la Demande de brevet européen EP-A-0 029 991 déposée par la demanderesse. Il est repoussé vers le haut par des moyens élastiques 24, par exemple par un ressort.

Selon la présente invention, l'appareil de cuisson comporte des moyens de support de la cuve 14 adaptés à maintenir cette cuve dans le puits en une seconde position, dite position haute, (fig. 3 et 5) pour laquelle le fond 16 de cette cuve est écarté de la résistance 12. On notera que cette mise en place de la cuve en position haute entraîne également l'ouverture de l'interrupteur 20 par libération de palpeur 22.

Ces moyens de support de la cuve 14 comprennent deux bossages 26 qui sont portés par la face latérale externe 28 de la paroi de la cuve 14 en deux régions diamétralement opposées de cette cuve, et qui sont adaptés à prendre appui sur le bord supérieur 30 du puits pour la position haute (fig. 3 et 5). Ces bossages 26 sont situés au voisinage du bord supérieur 32 de la cuve 14 et forment chacun une seule pièce avec une patte 34 qui porte une poignée de préhension 36 de la cuve 14.

Comme on le voit bien sur la figure 1, la paroi interne du puits présente, quant à elle, deux logements diamétralement opposés 38 débouchant vers l'intérieur du puits, qui s'étendent vers le bas à partir du bord supérieur 30 du puits, et qui sont adaptés à recevoir les bossages 26 pour permettre à la cuve d'occuper dans le puits sa position basse de cuisson (figures 2 et 4). En vue de faciliter l'engagement des bossages 26 de la cuve dans les logements 38, chacun de ces logements présente des côtés inclinés 40 formant des rampes de glissement.

Pour mettre en marche l'appareil, l'utilisateur place la cuve 14 au-dessus du puits, fait coïncider les bossages 26 avec les logements 38 et pose cette cuve en position de cuisson (fig. 2 et 4) pour laquelle l'interrupteur 20 est fermé.

Lorsque l'utilisateur désire arrêter la cuisson, il soulève légèrement la cuve 14 par les poignées 36, la fait tourner (flèche F de la figure 4) et fait reposer les bossages 26 sur le bord 30 du puits, ce qui, d'une part, amène la cuve 14 en position haute distante de la résistance (figures 3 et 5), et d'autre part, provoque l'ouverture de l'interrupteur 20 par libération du palpeur 22.

Le retour à la position de cuisson est obtenu par rotation de la cuve jusqu'à la retombée des bossages 26 dans les logements 38.

## Revendications

1. Appareil électrique de cuisson comportant un boîtier (10) présentant la forme d'un puits cylindrique, une résistance chauffante (12) disposée dans un plan horizontal au voisinage du fond de ce puits, un dispositif de commande de l'alimentation de cette résistance (12), une cuve amovible (14) adaptée à s'engager dans le puits et à occuper une première position, dite position de cuisson, pour laquelle le fond (16) de cette cuve (14) est en contact thermique avec la résistance (12), et des moyens de support de la cuve (14) adaptés à maintenir cette cuve (14) dans le puits en une seconde position, dite position haute, caractérisé en ce que en position haute le fond (16) de la cuve (14) est écarté de la résistance (12).

2. Appareil électrique de cuisson selon la revendication 1, caractérisé en ce que le dispositif de commande de la résistance (12) comprend un interrupteur (20) monté en série avec cette résistance (12) et manœuvré par un palpeur (22) agencé dans le puits de manière que la mise en place de la cuve (14) en sa position de cuisson entraîne la fermeture de cet interrupteur (20) par action de la cuve (14) sur le palpeur (22), et que la mise en place de la cuve (14) en sa position haute entraîne l'ouverture de cet interrupteur (20) par libération du palpeur (22).

3. Appareil électrique de cuisson selon la revendication 2, caractérisé en ce que le palpeur (22) est disposé dans la région centrale de la résistance (12) de manière à venir au contact du fond (16) de la cuve (14), et est repoussé vers le haut par des moyens élastiques (24).

4. Appareil électrique de cuisson selon l'une quelconque des revendications précédentes, caractérisé en ce que les moyens de support de la cuve (14) comprennent deux bossages (26) qui sont portés par la face latérale externe (28) de la paroi de la cuve (14) en deux régions diamétralement opposées de cette cuve (14), et qui sont adaptés à prendre appui sur le bord supérieur (30) du puits pour la position haute, tandis que la paroi interne du puits présente deux logements (38), qui s'étendent vers le bas à partir du bord (30) du puits et qui sont adaptés à recevoir lesdits bossages (26) pour permettre à la cuve (14) d'occuper dans le puits sa position de cuisson.

5. Appareil électrique de cuisson selon la revendication 4, caractérisé en ce que les bossages (26) sont situés au voisinage du bord supérieur (32) de la cuve (14).

6. Appareil électrique de cuisson selon la revendication 5, caractérisé en ce que chacun des bossages (26) forme une seule pièce avec une patte (34) qui porte une poignée (36) de préhension de la cuve (14).

## Patentansprüche

1. Elektrisches Kochgerät mit einem Gehäuse (10) in Form eines zylindrischen Troges, einem in einer waagerechten Ebene in der Nähe des Bodens dieses Troges angeordneten Heizwiderstand (12), einer Vorrichtung zur Steuerung der Stromzufuhr dieses Widerstands (12), einem herausnehmbaren Topf (14), der in den Trog passt und eine erste Stellung, die sogenannte Kochstellung, in welcher der Boden (16) dieses Topfes (14) in Wärmekontakt mit dem Widerstand (12) ist, einnehmen kann, und mit einer Vorrichtung zum Halten des Topfes (14), die dazu dient, diesen Topf (14) im Trog in einer zweiten Stellung, der sogenannten oberen Stellung, zu halten, dadurch gekennzeichnet, dass in der oberen Stellung der Boden (16) des Topfes (14) vom Widerstand (12) entfernt ist.

2. Elektrisches Kochgerät nach Anspruch 1, dadurch gekennzeichnet, dass die Vorrichtung zur Steuerung des Widerstandes (12) einen Schalter (20) aufweist, der in Reihe mit diesem Widerstand (12) geschaltet ist und durch einen Fühler (22) betätigt wird, der im Trog so angeordnet ist, dass das Einsetzen des Topfes (14) in seine Kochstellung das Schliessen dieses Schalters (20) durch Einwirkung des Topfes (14) auf den Fühler (22) bewirkt, und dass das Anheben des Topfes (14) in seine obere Stellung das Öffnen dieses Schalters (20) durch Freigabe des Fühlers (22) bewirkt.

3. Elektrisches Kochgerät nach Anspruch 2, dadurch gekennzeichnet, dass der Fühler (22) im Mittelbereich des Widerstands (12) so angeordnet ist, dass er in Berührung mit dem Boden (16) des Topfes (14) kommt, und durch eine elastische Vorrichtung (24) nach oben zurückgedrückt wird.

4. Elektrisches Kochgerät nach einem der vorangehenden Ansprüche, dadurch gekennzeichnet, dass die Haltevorrichtung des Topfes (14) zwei Vorsprünge (26) aufweist, die von der seitlichen Aussenseite (28) der Wand des Topfes (14) in zwei diametral gegenüberliegenden Bereichen dieses Topfes (14) getragen und so ausgebildet sind, dass sie sich in der oberen Stellung auf dem oberen Rand (30) des Troges abstützen, während die Innenwand des Troges zwei Sitze (38) aufweist, die sich vom Rand (30) des Troges nach unten erstrecken und zur Aufnahme dieser Vorsprünge (26) dienen, damit der Topf (14) im Trog seine Kochstellung einnehmen kann.

5. Elektrisches Kochgerät nach Anspruch 4, dadurch gekennzeichnet, dass die Vorsprünge (26) in der Nähe des oberen Randes (32) des Topfes (14) angeordnet sind.

6. Elektrisches Kochgerät nach Anspruch 5, dadurch gekennzeichnet, dass jeder der Vorsprünge (26) einstückig mit einem Fuss (34) ist, der einen Topfgriff (36) zum Erfassen des Topfes (14) trägt.

## Claims

1. Electrical cooking apparatus comprising a casing (10) of cylindrical pan shape, a heating resistance (12) disposed in a horizontal plane near the bottom of said pan, means for controlling the current supply to said resistance (12), a removable pot (14) which fits into said pan and which may take a first or so-called cooking position in which the bottom (16) of said pot (14) is in thermal contact with said resistance (12), and comprising means for supporting the pot (14) and intended to support said pot (14) within said pan in a second or so-called upper position, characterized in that in said upper position the bottom (16) of the pot (14) is remote from the resistance (12).

2. Electrical cooking apparatus as claimed in claim 1, characterized in that the means for controlling the resistance (12) include a switch (20) connected in series to said resistance (12) and adapted to be actuated by a sensor (22) disposed within said pan such that insertion of the pot (14) into the cooking position causes the switch (20) to close due to the action of the pot (14) on the sensor (22), and that lifting of the pot (14) into the upper position thereof causes the switch (20) to open due to release of the sensor (22).

3. Electrical cooking apparatus as claimed in claim 2, characterized in that the sensor (22) is disposed in the central region of the resistance (12) such that it is brought into contact with the bottom (16) of the pot (14) and is urged back upwardly by elastic means (24).

4. Electrical cooking apparatus as claimed in any of the preceding claims, characterized in that the holding means for the pot (14) includes two projections (26) carried by the lateral outer side (28) of the wall of the pot (14) in two diametrally opposite regions of said pot (14) and adapted to be supported in the upper position on the top edge (30) of the pan, while the inner wall of the pan includes two seating means (38) which extend downwardly from the edge (30) of the pan and are adapted to receive said projections (26) so that the pot (14) may take its cooking position in the pan.

5. Electrical cooking apparatus as claimed in claim 4, characterized in that the projections (26) are disposed near the top edge (32) of the pot (14).

6. Electrical cooking apparatus as claimed in claim 5, characterized in that each of said projections (26) is integrally formed with a lug (34) which carries a handle (36) for gripping the pot (14).

Fig 1

Fig 5

Fig 4

5

0 063 822

Fig 2

Fig 3